Europäisches Patentamt

European Patent Office

Office européen des brevets

(19)

(11) Publication number: **0 430 170 B1**

(12) **EUROPEAN PATENT SPECIFICATION**

(45) Date of publication of patent specification: **03.08.94**  (51) Int. Cl.⁵: **C09K 5/04**

(21) Application number: **90122653.0**

(22) Date of filing: **27.11.90**

(54) **Working fluid.**

(30) Priority: **30.11.89 JP 311153/89**
**30.11.89 JP 311156/89**

(43) Date of publication of application:
**05.06.91 Bulletin 91/23**

(45) Publication of the grant of the patent:
**03.08.94 Bulletin 94/31**

(84) Designated Contracting States:
**DE FR GB**

(56) References cited:
**US-A- 3 173 872**
**US-A- 3 444 085**
**US-A- 3 733 273**

**WORLD PATENT INDEX, LATEST, Derwent
Publications Ltd, London, GB; & JP-A-63 308
084**

(73) Proprietor: **MATSUSHITA ELECTRIC INDUSTRI-
AL CO., LTD.**
**1006, Oaza Kadoma
Kadoma-shi, Osaka-fu, 571(JP)**

(72) Inventor: **Yoshida, Yuji**
**1-5-18, Minami-machi
Itami-shi, Hyogo-ken(JP)**
Inventor: **Arita, Koji**
**2-1-6, Awaji,
Higashiyodogawa-ku
Osaka-shi, Osaka-fu(JP)**
Inventor: **Funakura, Masami**
**1-5-1, Shodaiminami-machi
Hirakata-shi, Osaka-fu(JP)**

(74) Representative: **Eisenführ, Speiser & Partner**
**Martinistrasse 24
D-28195 Bremen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to a working fluid which comprises plural halogenated hydrocarbons and is used in air conditoners, heat pumps and the like.

Hitherto, as working fluids in air conditioners, heat pumps and the like, are used halogenated hydrocarbons derived from methane or ethane, which are also called as fluorinated halocarbons. They work at such utilization temperature that the condensation temperature and/or the evaporation temperature are from about 0 (zero) to about 50°C. Among them, chlorodifluoromethane ($CHClF_2$, R22) with a boiling point of -40.8°C is widely used as a working fluid in an air conditioner for a building and a large size refrigeration system.

Recently, depletion of the ozone layer in the stratosphere with the fluorinated halocarbon is seriously discussed as one of global environmental problems, and amounts to be used and produced of some fully halogenated chlorofluorocarbons (CFCs) which have high ozone depletion potential are limited by the Montreal Protocol. In future, their use and production will be banned.

R22 has an ozone depletion potential (hereinafter referred to as "ODP") of 0.05 when the ODP of trichlorofluoromethane ($CCl_3F$, R11) is defined to be 1 (one). Though R22 is not a CFC, its production and use are expected to increase and it is expected that R22 will have significant influences on the human living in future, since the air conditioners and the heat pumps are and will be widely used. Therefore, it is highly desired to quickly develop a working fluid which has a small ODP and can be used as a substitute for R22.

It is the object of the present invention to provide a working fluid which has less influence on the ozone layer in the stratosphere and can be used as a substitute for R22.

According to the present invention, there is provided a working fluid comprising not more than 95 % by weight tetrafluoroethane ($C_2H_2F_4$), not more than 90 % by weight 1,1-difluoroethane ($C_2H_4F_2$) and at least one fluorinated hydrocarbon selected from the group consisting of methane derivatives and ethane derivatives as given in claim 1. These derivatives are hereinafter referred to as "fluorinated methane or ethane derivatives" and have a boiling point of not higher than -40°C under atmospheric pressure.

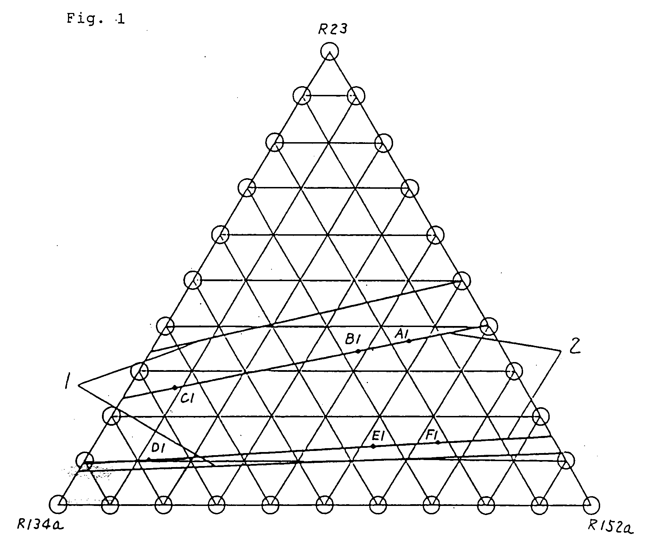

Figs. 1 to 8 are ternary composition diagrams of the working fluids in Examples 1 to 8, respectively.

Among the components of the working fluid of the present invention, tetrafluoroethane and difluoroethane have substantially no ozone depletion potential, namely their ODPs are substantially zero and they contain no chlorine atom in their molecular structures.

Since fluorinated methane or ethane derivatives have no chlorine atom in their molecular structure, they have substantially no ozone depletion potential. When they are mixed with tetrafluoroethane and difluoroethane, the mixture has substantially the same boiling point as R22.

The fluorinated methane or ethane derivatives are trifluoromethane ($CHF_3$, ODP = 0), difluoromethane ($CH_2F_2$, ODP = 0), pentafluoroethane ($C_2HF_5$, ODP = 0) and 1,1,1-trifluoroethane ($C_2H_3F_3$, ODP = 0).

The working fluid of the present invention has much smaller influences on the ozone layer in the stratosphere than R22, since it comprises tetrafluoroethane and difluoroethane which have substantially no ozone depletion potential (ODP = 0) and the fluorinated methane or ethane derivative (having a boiling point of not higher than -40°C) which contains no chlorine atom in the molecular structure and has substantially no ozone depletion potential.

In a specific composition range, the working fluid of the present invention has substantially the same vapor pressure as R22 in the temperature range between about 0°C to about 50°C and is suitable as a working fluid which can be used in presently used apparatuses as a substitute for R22.

The working fluid of the present invention is expected to have very small ODP, namely substantially 0 (zero).

In addition, since the working fluid of the present invention is a non-azeotropic mixture and has a temperature gradient in the condensing and evaporating processes, a higher coefficient of performance (COP) than R22 is expected when Lorenz cycle in which a temperature difference from a heat source is decreased is assembled.

The fluorinated halocarbons having the ozone depletion potential tend to have large global warming potential (hereinafter referred to as "GWP") when their ODP is large. Since the working fluid of the present invention comprises the above three essential components, its GWP may be substantially the same as or smaller than that of R22. Therefore, the working fluid of the present invention may have smaller influence on the global warming.

The present invention will be illustrated by following Examples.

2

Example 1

Fig. 1 shows a ternary composition diagram indicating equilibrium states of a mixture consisting of trifluoromethane (R23), 1,1,1,2-tetrafluoroethane (R134a) and 1,1-difluoroethane (R152a) at specific temperatures under specific pressure in a triangular coordinate.

In the triangular coordinate, in the counterclockwise direction from the top vertex, single compounds are assigned on the vertexes from a compound having the lowest boiling point to one having the highest boiling point. A composition (weight ratio) of the three compounds at one point on the triangular coordinate is expressed by a ratio of distances between said point and the opposite sides. The distance between said point and the opposite side corresponds to a proportion of the compound which is assigned to the vertex which faces said side.

In Fig. 1, the lines 1 are phase equilibrium lines of the mixture at 0°C under pressure of 4.044 kg/cm²G. These temperature and pressure correspond to a saturated state of R22. The upper one of the phase equilibrium lines 1 (corresponding to R22 at 0°C) is a saturated vapor line, and the lower one is a saturated liquid line. In the area between these two lines, the mixture is in the phase equilibrium state. The lines 2 are phase equilibrium lines of the mixture at 50°C under pressure of 18.782 kg/cm²G. These temperature and pressure correspond to a saturated state of R22.

If R23 alone is used, it exceeds the critical temperature at 50°C. However, the mixture has the saturated state so that it can be used in the air conditioner or heat pump which has the utilization temperature range between about 0°C and about 50°C.

As understood from Fig. 1, the mixture comprising about 5 to about 50 % by weight of R23, about 0 to about 95 % by weight (for example, about 1 to about 95 % by weight) of R134a and about 0 to about 90 % by weight (for example, about 1 to about 90 % by weight) of R152a is preferred, since it has substantially the same vapor pressure as R22 in the utilization temperature range between about 0°C and about 50°C. Further, the mixture comprising about 10 to about 40 % by weight of R23, about 0 to about 90 % by weight (for example, about 1 to about 90 % by weight) of R134a and about 0 to about 85 % by weight (for example, about 1 to about 85 % by weight) of R152a is more preferred, since it has substantially the same vapor pressure as R22 at all the utilizing temperatures between 0°C and 50°C.

The compositions of the working fluids at the points A1 to F1 in Fig. 1 are shown in Table 1.

## Table 1

| Point | A1 | B1 | C1 | D1 | E1 | F1 |
|---|---|---|---|---|---|---|
| R23 (wt. %) | 36.8 | 34.6 | 26.7 | 10.3 | 13.5 | 14.3 |
| R134a (wt. %) | 16.9 | 27.1 | 64.2 | 77.8 | 34.3 | 21.6 |
| R152a (wt. %) | 46.3 | 38.3 | 9.1 | 11.9 | 52.3 | 64.1 |

The points A1, B1 and C1 are on the saturated vapor line of the phase equilibrium lines 2 (corresponding to R22 at 50°C), and the points D1, E1 and F1 are on the saturated liquid line of the phase equilibrium lines 2. Further, all of them are in the area between the saturated vapor line and the saturated liquid line of the phase equilibrium lines 1 (corresponding to R22 at 0°C). Therefore, the mixture is in the phase equilibrium state at 0°C under pressure of 4.044 kg/cm²G which correspond to the saturated state of R22.

Then, the working fluid having the composition in Table 1 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

In the above, the mixtures having the compositions on the phase equilibrium lines 2 (corresponding to R22 at 50°C) have been explained. In addition, when working fluids having compositions in the area inside the points A1 to F1, namely those having compositions which realize the phase equilibrium states at 0°C under pressure of 4.044 kg/cm²G and at 50°C under pressure of 18.782 kg/cm²G both corresponding to the saturated state of R22 are operated in the similar way to the above, condensation and evaporation temperatures which are substantially the same as those of R22 can be achieved in the utilization temperature range between about 0°C and about 50°C.

Example 2

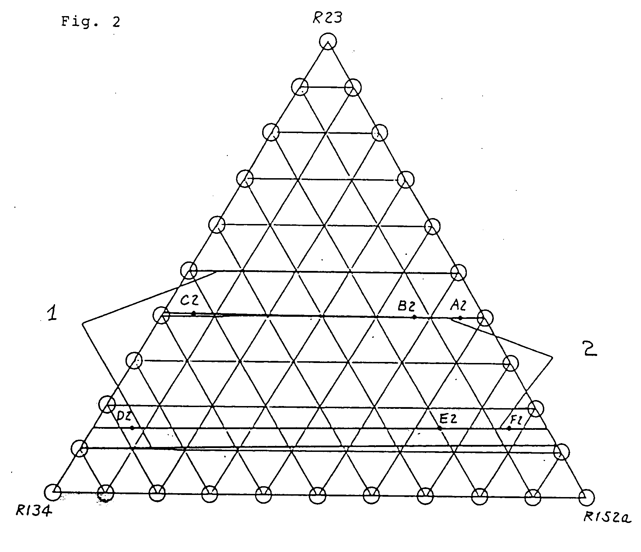

Fig. 2 shows a ternary composition diagram indicating equilibrium states of a mixture consisting of R23, 1,1,2,2-tetrafluoroethane (R134) and R152a at specific temperatures under specific pressure in a triangular coordinate.

Although R152a has a lower boiling point than R134 under atmospheric pressure, in Fig. 2, R23, R134 and R152a are assigned to the vetexes in this order from the top vetex in the conterclockwise for easy comparision with Fig. 1. In Fig. 2, the lines 1 are phase equilibrium lines of the mixture at 0°C under pressure of 4.044 kg/cm$^2$G, and the lines 2 are phase equilibrium lines of the mixture at 50°C under pressure of 18.782 kg/cm$^2$G.

As understood from Fig. 2, the mixture comprising about 10 to about 50 % by weight of R23, about 0 to about 90 % by weight (for example, about 1 to about 90 % by weight) of R134 and about 0 to about 90 % by weight (for example, about 1 to about 90 % by weight) of R152a is preferred, since it has substantially the same vapor pressure as R22. Further, the mixture comprising about 15 to about 40 % by weight of R23, about 0 to about 85 % by weight (for example, about 1 to about 85 % by weight) of R134 and about 0 to about 85 % by weight (for example, about 1 to about 85 % by weight) of R152a is more preferred.

The compositions of the working fluids at the points A2 to F2 in Fig. 2 are shown in Table 2.

Table 2

| Point | A2 | B2 | C2 | D2 | E2 | F2 |
|---|---|---|---|---|---|---|
| R23 (wt. %) | 40.4 | 40.4 | 40.8 | 15.2 | 15.6 | 15.8 |
| R134 (wt. %) | 4.3 | 12.6 | 53.4 | 77.6 | 19.9 | 6.9 |
| R152a (wt. %) | 55.3 | 47.0 | 5.8 | 7.2 | 64.5 | 77.3 |

The points A2, B2 and C2 are on the saturated vapor line of the phase equilibrium lines 2 (corresponding to R22 at 50°C), and the points D2, E2 and F2 are on the saturated liquid line of the phase equilibrium lines 2. Further, all of them are in the area between the saturated vapor line and the saturated liquid line of the phase equilibrium lines 1 (corresponding to R22 at 0°C). Therefore, the mixture is in the phase equilibrium state at 0°C under pressure of 4.044 kg/cm$^2$G which correspond to the saturated state of R22.

Then, the working fluid having the composition in Table 2 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

In the above, the mixtures having the compositions on the phase equilibrium lines 2 (corresponding to R22 at 50°C) have been explained. In addition, when working fluids having compositions in the area inside the points A2 to F2, namely those having compositions which realize the phase equilibrium states at 0°C under pressure of 4.044 kg/cm$^2$G and at 50°C under pressure of 18.782 kg/cm$^2$G both corresponding to the saturated state of R22 are operated in the similar way to the above, condensation and evaporation temperatures which are substantially the same as those of R22 can be achieved in the utilization temperature range between about 0°C and about 50°C.

As understood from Figs. 1 and 2, the mixture comprising about 5 to about 50 % by weight of R23, about 0 to about 95 % by weight (for example, about 1 to about 95 % by weight) of tetrafluoroethane and about 0 to about 90 % by weight (for example, about 1 to about 90 % by weight) of difluoroethane is preferred, since it has substantially the same vapor pressure as R22 in the utilization temperature between about 0°C and about 50°C. Further, the mixture comprising about 10 to about 40 % by weight of R23, about 0 to about 85 % by weight (for example, about 1 to about 85 % by weight) of tetrafluoroethane and about 0 to about 85 % by weight (for example, about 1 to about 85 % by weight) of difluoroethane is more preferred, since it has substantially the same vapor pressure as R22 at all the utilizing temperature between 0°C and 50°C.

4

Since the working fluids in Examples 1 and 2 are expected to have the ODP of 0 (zero), they are very promising as substitute working fluids for R22.

Example 3

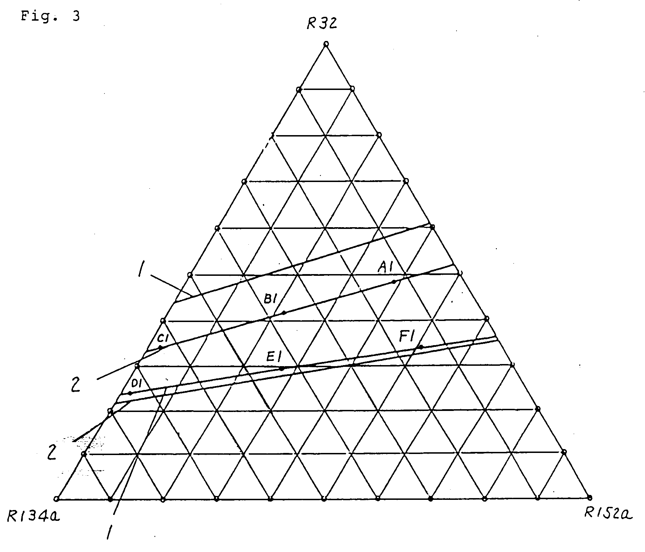

Fig. 3 shows a ternary composition diagram indicating equilibrium states of a mixture consisting of difluoromethane (R32), R134a and 152a at specific temperatures under specific pressure in a triangular coordinate. In Fig. 3, the lines 1 are phase equilibrium lines of the mixture at 0°C under pressure of 4.044 kg/cm²G, and the lines 2 are phase equilibrium lines of the mixture at 50°C under pressure of 18.782 kg/cm²G.

The compositions of the working fluids at the points A1 to F1 in Fig. 3 are shown in Table 3.

Table 3

| Point | A1 | B1 | C1 | D1 | E1 | F1 |
|---|---|---|---|---|---|---|
| R32 (wt. %) | 48.4 | 41.5 | 34.5 | 24.3 | 29.3 | 34.1 |
| R134a (wt. %) | 12.6 | 37.3 | 63.0 | 74.4 | 43.0 | 13.7 |
| R152a (wt. %) | 39.0 | 21.2 | 2.5 | 1.3 | 27.7 | 52.2 |

In this case, the mixture comprising about 20 to about 60 % by weight of R32, about 0 to about 80 % by weight (for example, about 1 to about 80 % by weight) of R134a and about 0 to about 65 % by weight (for example, about 1 to about 65 % by weight) of R152a is preferred since it has substantially the same vapor pressure as R22 in the utilization temperature between about 0°C and about 50°C. Further, the mixture comprising about 25 to about 50 % by weight of R32, about 0 to about 75 % by weight (for example, about 1 to about 75 % by weight) of R134a and about 0 to about 65 % by weight (for example, about 1 to about 65 % by weight) of R152a is more preferred, since it has substantially the same vapor pressure as R22 at all the utilizing temperature between 0°C and 50°C.

The working fluid having the composition in Table 3 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

Example 4

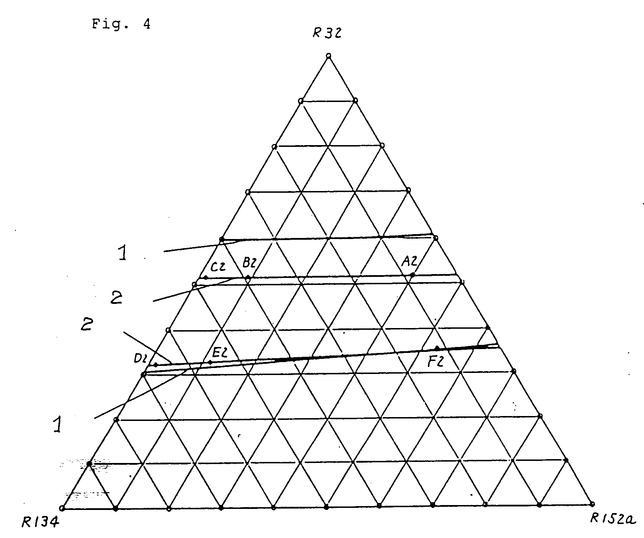

Fig. 4 shows a ternary composition diagram indicating equilibrium states of a mixture consisting of R32, R134 and 152a at specific temperatures under specific pressure in a triangular coordinate.

The compositions of the working fluids at the points A2 to F2 in Fig. 4 are shown in Table 4.

Table 4

| Point | A2 | B2 | C2 | D2 | E2 | F2 |
|---|---|---|---|---|---|---|
| R32 (wt. %) | 51.9 | 51.8 | 51.8 | 32.5 | 33.0 | 35.4 |
| R134 (wt. %) | 8.3 | 38.6 | 47.0 | 66.0 | 55.2 | 11.9 |
| R152a (wt. %) | 39.8 | 9.6 | 1.2 | 1.5 | 11.8 | 52.7 |

In this case, the mixture comprising about 30 to about 60 % by weight of R32, about 0 to about 70 % by weight (for example, about 1 to about 70 % by weight) of R134 and about 0 to about 65 % by weight (for example, about 1 to about 65 % by weight) of R152a is preferred, and further, the mixture comprising about 35 to about 50 % by weight of R32, about 0 to about 65 % by weight (for example, about 1 to about 65 % by weight) of R134 and about 0 to about 65 % by weight (for example, about 1 to about 65 % by weight) of R152a is more preferred.

5

As understood from Figs. 3 and 4, the mixture comprising about 20 to about 60 % by weight of R32, about 0 to about 80 % by weight (for example, about 1 to about 80 % by weight) of tetrafluoroethane and about 0 to about 65 % by weight (for example, about 1 to about 65 % by weight) of difluoroethane is preferred. Further, the mixture comprising about 25 to about 50 % by weight of R32, about 0 to about 75 % by weight (for example, about 1 to about 75 % by weight) of tetrafluoroethane and about 0 to about 65 % by weight (for example, about 1 to about 65 % by weight) of difluoroethane is more preferred.

Since the working fluids in Examples 3 and 4 are expected to have the ODP of 0 (zero), they are very promising as substitute working fluids for R22.

Example 5

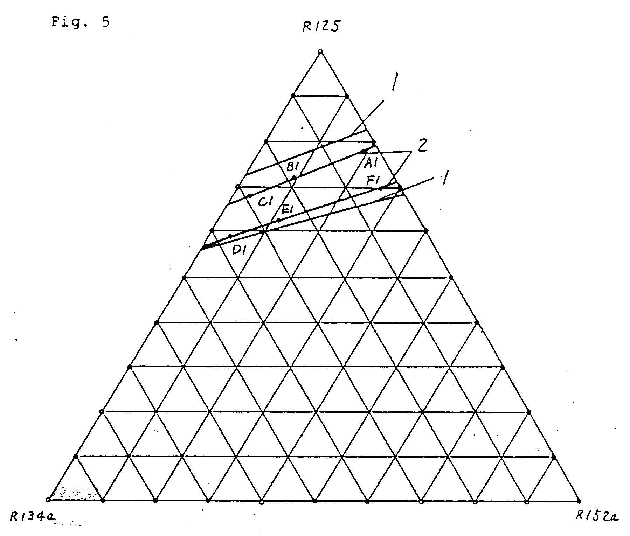

Fig. 5 shows a ternary composition diagram indicating equilibrium states of a mixture consisting of pentafluoroethane (R125), R134a and 152a at specific temperatures under specific pressure in a triangular coordinate. In Fig. 5, the lines 1 are phase equilibrium lines of the mixture at 0°C under pressure of 4.044 kg/cm$^2$G, and the lines 2 are phase equilibrium lines of the mixture at 50°C under pressure of 18.782 kg/cm$^2$G.

The compositions of the working fluids at the points A1 to F1 in Fig. 5 are shown in Table 5.

Table 5

| Point | A1 | B1 | C1 | D1 | E1 | F1 |
|---|---|---|---|---|---|---|
| R125 (wt. %) | 78.4 | 71.9 | 67.9 | 58.9 | 63.1 | 69.9 |
| R134a (wt. %) | 2.3 | 18.8 | 29.3 | 37.3 | 24.3 | 3.1 |
| R152a (wt. %) | 19.3 | 9.3 | 2.8 | 3.8 | 12.6 | 27.0 |

In this case, the mixture comprising about 55 to about 85 % by weight of R125, about 0 to about 45 % by weight (for example, about 1 to about 45 % by weight) of R134a and about 0 to about 30 % by weight (for example, about 1 to about 30 % by weight) of R152a is preferred since it has substantially the same vapor pressure as R22 in the utilization temperature between about 0°C and about 50°C. Further, the mixture comprising about 55 to about 80 % by weight of R125, about 0 to about 45 % by weight (for example, about 1 to about 45 % by weight) of R134a and about 0 to about 30 % by weight (for example, about 1 to about 30 % by weight) of R152a is more preferred, since it has substantially the same vapor pressure as R22 at all the utilizing temperature between 0°C and 50°C.

The working fluid having the composition in Table 5 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

Example 6

Fig. 4 shows a ternary composition diagram indicating equilibrium states of a mixture consisting of R125, R134 and 152a at specific temperatures under specific pressure in a triangular coordinate.

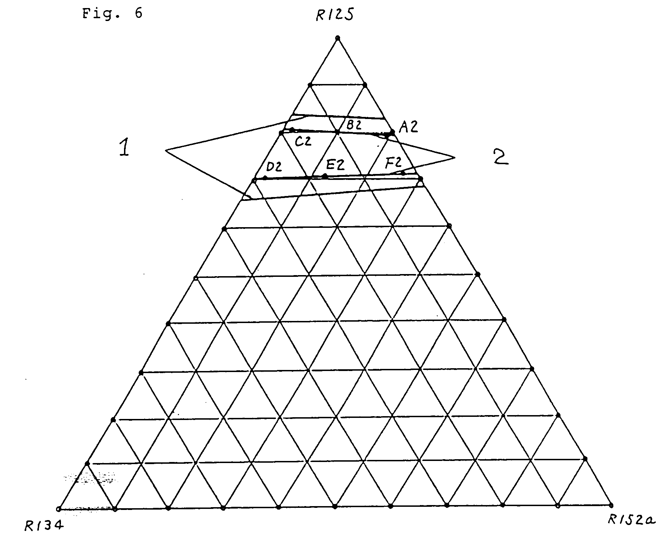

The compositions of the working fluids at the points A2 to F2 in Fig. 6 are shown in Table 6.

Table 6

| Point | A2 | B2 | C2 | D2 | E2 | F2 |
|---|---|---|---|---|---|---|
| R125 (wt. %) | 79.3 | 80.0 | 80.6 | 70.4 | 70.5 | 70.8 |
| R134 (wt. %) | 1.4 | 10.8 | 17.6 | 27.2 | 17.0 | 2.2 |
| R152a (wt. %) | 19.3 | 9.2 | 1.8 | 2.4 | 12.5 | 27.0 |

In this case, the mixture comprising about 65 to about 85 % by weight of R125, about 0 to about 35 % by weight (for example, about 1 to about 35 % by weight) of R134 and about 0 to about 30 % by weight (for example, about 1 to about 30 % by weight) of R152a is preferred, and further, the mixture comprising about 70 to about 80 % by weight of R125, about 0 to about 30 % by weight (for example, about 1 to about 30 % by weight) of R134 and about 0 to about 30 % by weight (for example, about 1 to about 30 % by weight) of R152a is more preferred.

As understood from Figs. 5 and 6, the mixture comprising about 55 to about 85 % by weight of R125, about 0 to about 45 % by weight (for example, about 1 to about 45 % by weight) of tetrafluoroethane and about 0 to about 30 % by weight (for example, about 1 to about 30 % by weight) of difluoroethane is preferred. Further, the mixture comprising about 55 to about 80 % by weight of R125, about 0 to about 45 % by weight (for example, about 1 to about 45 % by weight) of tetrafluoroethane and about 0 to about 30 % by weight (for example, about 1 to about 30 % by weight) of difluoroethane is more preferred.

Since the working fluids in Examples 5 and 6 are expected to have the ODP of 0 (zero), they are very promising as substitute working fluids for R22.

Example 7

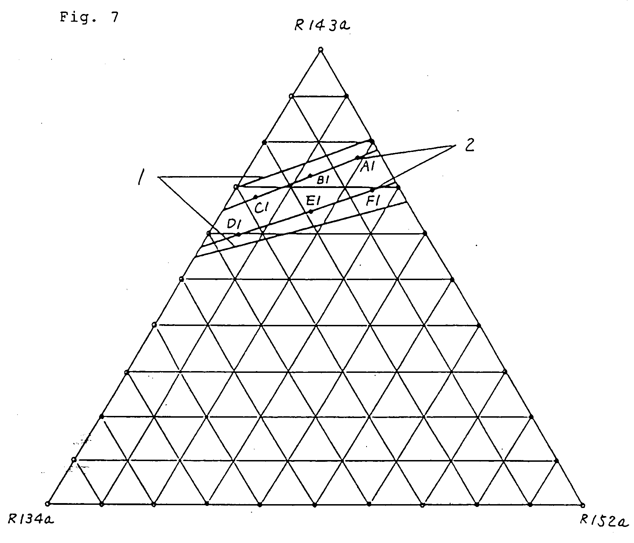

Fig. 7 shows a ternary composition diagram indicating equilibrium states of a mixture consisting of 1,1,1-trifluoroethane (R143a), R134a and R152a at specific temperatures under specific pressure in a triangular coordinate. In Fig. 7, the lines 1 are phase equilibrium lines of the mixture at 0 °C under pressure of 4.044 kg/cm$^2$G, and the lines 2 are phase equilibrium lines of the mixture at 50 °C under pressure of 18.782 kg/cm$^2$G.

The compositions of the working fluids at the points A1 to F1 in Fig. 7 are shown in Table 7.

Table 7

| Point | A1 | B1 | C1 | D1 | E1 | F1 |
| --- | --- | --- | --- | --- | --- | --- |
| R143a (wt. %) | 76.8 | 72.6 | 67.7 | 59.8 | 64.8 | 69.2 |
| R134a (wt. %) | 4.6 | 15.4 | 28.1 | 34.7 | 19.3 | 5.9 |
| R152a (wt. %) | 18.6 | 12.0 | 4.2 | 5.5 | 15.9 | 24.9 |

In this case, the mixture comprising about 55 to about 80 % by weight of R143a, about 0 to about 45 % by weight (for example, about 1 to about 45 % by weight) of R134a and about 0 to about 35 % by weight (for example, about 1 to about 35 % by weight) of R152a is preferred since it has substantially the same vapor pressure as R22 in the utilization temperature between about 0 °C and about 50 °C. Further, the mixture comprising about 55 to about 80 % by weight of R143a, about 0 to about 45 % by weight (for example, about 1 to about 45 % by weight) of R134a and about 0 to about 30 % by weight (for example, about 1 to about 30 % by weight) of R152a is more preferred, since it has substantially the same vapor pressure as R22 at all the utilizing temperature between 0 °C and 50 °C.

The working fluid having the composition in Table 7 is in the saturated state or the phase equilibrium state under the saturated vapor pressure condition of R22 at 0 °C and 50 °C, so that, in the utilization temperature range between about 0 °C and about 50 °C, the working fluid has substantially the same condensation and evaporation temperatures as R22 when operated under the saturated vapor pressure of R22 at said temperatures.

Example 8

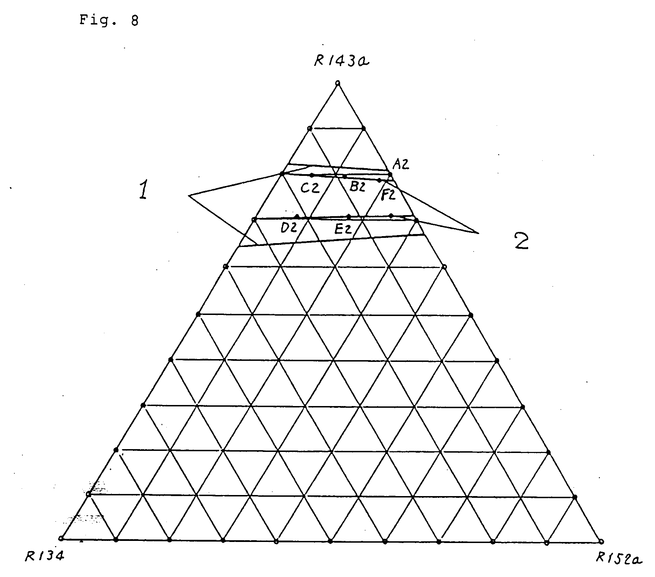

Fig. 8 shows a ternary composition diagram indicating equilibrium states of a mixture consisting of R143a, R134 and 152a at specific temperatures under specific pressure in a triangular coordinate.

The compositions of the working fluids at the points A2 to F2 in Fig. 8 are shown in Table 8.

# EP 0 430 170 B1

Table 8

| Point | A2 | B2 | C2 | D2 | E2 | F2 |
|---|---|---|---|---|---|---|
| R143a (wt. %) | 78.7 | 79.1 | 79.6 | 70.5 | 70.7 | 71.0 |
| R134 (wt. %) | 2.6 | 8.1 | 14.4 | 21.8 | 12.4 | 4.0 |
| R152a (wt. %) | 18.7 | 12.8 | 6.0 | 7.7 | 16.9 | 25.0 |

In this case, the mixture comprising about 65 to about 80 % by weight of R143a, about 0 to about 35 % by weight (for example, about 1 to about 35 % by weight) of R134 and about 0 to about 35 % by weight (for example, about 1 to about 35 % by weight) of R152a is preferred, and further, the mixture comprising about 70 to about 80 % by weight of R143a, about 0 to about 30 % by weight (for example, about 1 to about 30 % by weight) of R134 and about 0 to about 30 % by weight (for example, about 1 to about 30 % by weight) of R152a is more preferred.

As understood from Figs. 7 and 8, the mixture comprising about 55 to about 80 % by weight of trifluoroethane, about 0 to about 45 % by weight (for example, about 1 to about 45 % by weight) of tetrafluoroethane and about 0 to about 35 % by weight (for example, about 1 to about 35 % by weight) of difluoroethane is preferred. Further, the mixture comprising about 55 to about 80 % by weight of R143a, about 0 to about 45 % by weight (for example, about 1 to about 45 % by weight) of tetrafluoroethane and about 0 to about 30 % by weight (for example, about 1 to about 30 % by weight) of difluoroethane is more preferred.

Since the working fluids in Examples 7 and 8 are expected to have the ODP of 0 (zero), they are very promising as substitute working fluids for R22.

From the above results in Examples 1-8, it is understood that the mixture comprising not more than 95 % (for example, about 1 to about 95 % by weight) of tetrafluoroethane, not more than 90 % by weight (for example, about 1 to about 90 % by weight) of difluoroethane and 5 to 50 % by weight of trifluoromethane or 20 to 60 % by weight of difluoromethane or 55 to 85 % by weight of pentafluoroethane or 55 to 80 % by weight of trifluoroethane is preferred. Further, the mixture comprising not more than 85 % (for example, about 1 to about 85 % by weight) of tetrafluoroethane, not more than 85 % by weight (for example, about 1 to about 85 % by weight) of difluoroethane and 10 to 40 % by weight of trifluoromethane or 25 to 50 % by weight of difluoromethane or 55 to 80 % by weight of pentafluoroethane or 55 to 80 % by weight of trifluoroethane is more preferred.

In the above Examples, the mixtures contain three fluorinated halocarbons, although it is possible to mix four or more fluorinated halocarbon including structural isomers. In such case, preferably, the mixture comprises tetrafluoroethane as the first component, difluoroethane as the second component and at least one component selected from the group consisting of trifluoromethane, difluoromethane, pentafluoroethane and trifluoroethane.

## Claims

1. A working fluid comprising tetrafluoroethane and difluoro-ethane
   **characterized in that**
   said fluid comprises
   not more than 95 % by weight of tetrafluoroethane,
   not more than 90 % by weight of 1,1-difluoroethane, and
   at least one fluorinated hydrocarbon selected from the group consisting of
   5 to 50 % by weight of trifluoromethane,
   20 to 60 % by weight of difluoromethane,
   55 to 85 % by weight of pentafluoroethane, and
   55 to 80 % by weight of 1,1,1-trifluoroethane.

2. The working fluid as claimed in claim 1, characterized in that it comprises not more than 85 % by weight of tetrafluoroethane, not more than 85 % by weight of difluoroethane and at least one fluorinated hydrocarbon selected from the group consisting of 10 to 40 % by weight of trifluoromethane, 25 to 50 % by weight of difluoromethane, 55 to 80 % by weight of pentafluoroethane and 55 to 80 % by weight of trifluoroethane.

8

3. The working fluid as claimed in claim 1, characterized in that it comprises 5 to 50 % by weight of trifluoromethane, not more than 95 % by weight of tetrafluoroethane and not more than 90 % by weight of difluoroethane.

4. The working fluid as claimed in claim 3, characterized in that it comprises 10 to 40 % by weight of trifluoromethane, not more than 85 % by weight of tetrafluoroethane and not more than 85 % by weight of difluoroethane.

5. The working fluid as claimed in claim 1, characterized in that it comprises 20 to 60 % by weight of difluoromethane, not more than 80 % by weight of tetrafluoroethane and not more than 65 % by weight of difluoroethane.

6. The working fluid as claimed in claim 5, characterized in that it comprises 25 to 50 % by weight of difluoromethane, not more than 75 % by weight of tetrafluoroethane and not more than 65 % by weight of difluoroethane

7. The working fluid as claimed in claim 1, characterized in that it comprises 55 to 85 % by weight of pentafluoroethane, not more than 45 % by weight of tetrafluoroethane and not more than 30 % by weight of difluoroethane.

8. The working fluid as claimed in claim 7, characterized in that it comprises 55 to 80 % by weight of pentafluoroethane, not more than 45 % by weight of tetrafluoroethane and not more than 30 % by weight of difluoroethane.

9. The working fluid as claimed in claim 1, characterized in that it comprises 55 to 80 % by weight of trifluoroethane, not more than 45 % by weight of tetrafluoroethane and not more than 35 % by weight of difluoroethane.

10. The working fluid as claimed in claim 1, characterized in that it comprises 55 to 80 % by weight of trifluoroethane, not more than 45 % by weight of tetrafluoroethane and not more than 30 % by weight of difluoroethane.

11. Use of the working fluid of anyone of the preceeding claims in an air conditioner or heat pump.

**Patentansprüche**

1. Arbeitsfluid, enthaltend Tetrafluorethan und Difluorethan,
   **dadurch gekennzeichnet**, daß
   das Fluid enthält:
   nicht mehr als 95 Gew-% Tetrafluorethan,
   nicht mehr als 90 Gew-% 1,1-Difluorethan und
   mindestens einen fluorierten Kohlenwasserstoff, ausgewählt aus der Gruppe bestehend aus
   5 bis 50 Gew-% Trifluormethan,
   20 bis 60 Gew-% Difluormethan,
   55 bis 85 Gew-% Pentafluorethan und
   55 bis 80 Gew-% 1,1,1-Trifluorethan.

2. Arbeitsfluid nach Anspruch 1, dadurch gekennzeichnet, daß es nicht mehr als 85 Gew-% Tetrafluorethan, nicht mehr als 85 Gew-% Difluorethan und mindestens einen fluorierten Kohlenwasserstoff enthält, ausgewählt aus der Gruppe bestehend aus 10 bis 40 Gew-% Trifluormethan, 25 bis 50 Gew-% Difluormethan, 55 bis 80 Gew-% Pentafluorethan und 55 bis 80 Gew-% Trifluorethan.

3. Arbeitsfluid nach Anspruch 1, dadurch gekennzeichnet, daß es 5 bis 50 Gew-% Trifluormethan, nicht mehr als 95 Gew-% Tetrafluorethan und nicht mehr als 90 Gew-% Difluorethan enthält.

4. Arbeitsfluid nach Anspruch 3, dadurch gekennzeichnet, daß es 10 bis 40 Gew-% Trifluormethan, nicht mehr als 85 Gew-% Tetrafluorethan und nicht mehr als 85 Gew-% Difluorethan enthält.

**5.** Arbeitsfluid nach Anspruch 1, dadurch gekennzeichnet, daß es 20 bis 60 Gew-% Difluormethan, nicht mehr als 80 Gew-% Tetrafluorethan und nicht mehr als 65 Gew-% Difluorethan enthält.

**6.** Arbeitsfluid nach Anspruch 5, dadurch gekennzeichnet, daß es 25 bis 50 Gew-% Difluormethan, nicht mehr als 75 Gew-% Tetrafluorethan und nicht mehr als 65 Gew-% Difluorethan enthält.

**7.** Arbeitsfluid nach Anspruch 1, dadurch gekennzeichnet, daß es 55 bis 85 Gew-% Pentafluorethan, nicht mehr als 45 Gew-% Tetrafluorethan und nicht mehr als 30 Gew-% Difluorethan enthält.

**8.** Arbeitsfluid nach Anspruch 7, dadurch gekennzeichnet, daß es 55 bis 80 Gew-% Pentafluorethan, nicht mehr als 45 Gew-% Tetrafluorethan und nicht mehr als 30 Gew-% Difluorethan enthält.

**9.** Arbeitsfluid nach Anspruch 1, dadurch gekennzeichnet, daß es 55 bis 80 Gew-% Trifluorethan, nicht mehr als 45 Gew-% Tetrafluorethan und nicht mehr als 35 Gew-% Difluorethan enthält.

**10.** Arbeitsfluid nach Anspruch 1, dadurch gekennzeichnet, daß es 55 bis 80 Gew-% Trifluorethan, nicht mehr als 45 Gew-% Tetrafluorethan und nicht mehr als 30 Gew-% Difluorethan enthält.

**11.** Verwendung des Arbeitsfluids nach einem der vorhergehenden Ansprüche in einer Klimaanlage oder Wärmepumpe.

**Revendications**

**1.** Fluide moteur comprenant du tétrafluoroéthane et du difluoroéthane, caractérisé en ce que ledit fluide contient au plus 95 % en masse de tétrafluoroéthane, au plus 90 % en masse de 1,1-difluoroéthane et au moins un hydrocarbure fluoré choisi dans le coupe consistant en 5 à 50 % en masse de trifluorométhane, 20 à 60 % en masse de difluorométhane, 55 à 85 % en masse de pentafluoréthane, et 55 à 80 % en masse de trifluoroéthane.

**2.** Fluide moteur selon la revendication 1, caractérisé en ce qu'il contient au plus 85 % en masse de tétrafluoroéthane, au plus 85 % en masse de 1,1-difluoroéthane et au moins un hydrocarbure fluoré choisi dans le groupe consistant en 10 à 40 % en masse de trifluorométhane, 25 à 50 % en masse de difluorométhane, 55 à 80 % en masse de pentafluoréthane, et 55 à 80 % en masse de trifluoroéthane.

**3.** Fluide moteur selon la revendication 1, caractérisé en ce qu'il contient 5 à 50 % en masse de trifluorométhane, au plus 95 % en masse de tétrafluoroéthane et au plus 90 % en masse de difluoroéthane.

**4.** Fluide moteur selon la revendication 3, caractérisé en ce qu'il contient 10 à 40 % en masse de trifluorométhane, au plus 85 % en masse de tétrafluoroéthane et au plus 85 % en masse de difluoroéthane.

**5.** Fluide moteur selon la revendication 1, caractérisé en ce qu'il contient 20 à 60 % en masse de difluorométhane, au plus 80 % en masse de tétrafluoroéthane et au plus 65 % en masse de difluoroéthane.

**6.** Fluide moteur selon la revendication 5, caractérisé en ce qu'il contient 25 à 50 % en masse de difluorométhane, au plus 75 % en masse de tétrafluoroéthane et au plus 65 % en masse de difluoroéthane.

**7.** Fluide moteur selon la revendication 1, caractérisé en ce qu'il contient 55 à 85 % en masse de pentafluoroéthane, au plus 45 % en masse de tétrafluoroéthane et au plus 30 % en masse de difluoroéthane.

**8.** Fluide moteur selon la revendication 7, caractérisé en ce qu'il contient 55 à 80 % en masse de pentafluoroéthane, au plus 45 % en masse de tétrafluoroéthane et au plus 30 % en masse de difluoroéthane.

**9.** Fluide moteur selon la revendication 1, caractérisé en ce qu'il contient 55 à 80 % en masse de trifluoroéthane, au plus 45 % en masse de tétrafluoroéthane et au plus 35 % en masse de difluoroéthane.

**10.** Fluide moteur selon la revendication 1, caractérisé en ce qu'il contient 55 à 80 % en masse de trifluorométhane, au plus 45 % en masse de tétrafluoroéthane et au plus 30 % en masse de difluoroéthane.

**11.** Utilisation du fluide moteur d'une quelconque des revendications qui précèdent dans un appareil de conditionnement de l'air ou une pompe à chaleur.

Fig. 1

Fig. 2

Fig. 3

Fig. 4

Fig. 5

Fig. 6

Fig. 7

Fig. 8